(19) Europäisches Patentamt
European Patent Office
Office européen des brevets

(11) EP 4 461 536 A1

(12) EUROPEAN PATENT APPLICATION

(43) Date of publication:
**13.11.2024 Bulletin 2024/46**

(21) Application number: **23305762.9**

(22) Date of filing: **12.05.2023**

(51) International Patent Classification (IPC):
***B33Y 70/00*** *(2020.01)* ***C08F 2/48*** *(2006.01)*
***C08F 222/10*** *(2006.01)*

(52) Cooperative Patent Classification (CPC):
(C-Sets available)
**C08F 222/1065; B33Y 70/00; C08F 2/50** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ARKEMA FRANCE**
**92700 Colombes (FR)**

(72) Inventors:
- **ANDERSSON, Jonathan**
  **EXTON, 19341 (US)**
- **BITTNER, Ainsley**
  **EXTON, 19341 (US)**
- **KLANG, Jeffrey**
  **EXTON, 19341 (US)**
- **MCGRAIL, Brendan**
  **EXTON, 19341 (US)**
- **WOLF, William**
  **EXTON, 19341 (US)**

(74) Representative: **Arkema Patent**
**Arkema France**
**DRD-DPI**
**420, rue d'Estienne d'Orves**
**92705 Colombes Cedex (FR)**

# (54) ACTINICALLY-CURABLE COMPOSITIONS HAVING HIGH DIMENSIONAL ACCURACY

(57) According to some embodiments of the present disclosure, an actinically-curable composition may comprise a first component, a second component, and a third component. The first component comprises one or more compounds having at least two (meth)acrylate functional groups and at least one hydrogen bond donor group selected from the group consisting of N-H bond, O-H bond and S-H bond. The second component comprises one or more compounds having at least two (meth)acrylate functional groups and no hydrogen bond donor groups. The third component comprises one or more compounds having a single (meth)acrylate functional group and a cyclic moiety as further described herein. Additional embodiments disclosed herein include 3D printing processes for producing 3D printed articles and the 3D printed articles.

EP 4 461 536 A1

(52) Cooperative Patent Classification (CPC): (Cont.)

C-Sets
C08F 222/1065, C08F 222/102, C08F 220/1811,
C08F 222/1067;
C08F 222/1065, C08F 222/102, C08F 220/306,
C08F 222/1067

## Description

## FIELD OF THE INVENTION

The present disclosure relates to a curable chemical composition. Specifically, the present disclosure relates to an actinically-curable composition useful in 3D printing applications.

## BACKGROUND OF THE INVENTION

Actinically-cured 3D printing processes have the advantage of improved build quality and minimized layer lines relative to other 3D printing processes, such as fused deposition modelling. However, actinically-cured resins often experience anisotropic warping during cure, especially when large parts are being produced. Standard actinically-cured (photopolymer) resins may experience at least 5 % linear distortion during cure, which plays a significant role in the warping of printed parts. This warping and linear distortion compromises the dimensional accuracy and overall print fidelity of the resulting 3D printed articles or other actinically cured articles. High print fidelity is of great importance when producing detailed parts.

The use of uv-curable formulations containing ethoxylated bisphenol A dimethacrylate (Bis-EMA), urethane dimethacrylate (UDMA), and triethylene glycol dimethacrylate (TEGDMA) for dental resins to be 3D printed is known. See, Lin, Chih-Hsin, et al., "Mechanical Properties, Accuracy, and Cytotoxicity of UV-polymerized 3D Printing Resins Composed of Bis-EMA, UDMA, and TEGDMA," The Journal of Prosthetic Dentistry 123, 2 (2019) 349-354. Table 1 of this reference discloses a range of formulations with these three constituents. The paper mentions that these formulations may be used to 3D print dental resins using digital light processing (DLP). It also states that the printed objects from such formulations demonstrated accuracy and mechanical and biological properties that suggested their suitability for dental use.

Another approach to preventing anisotropic warpage has been adjusting photo-initiator chemistry to achieve high green strength and low distortion. This approach has not been sufficient for the detailed parts that are envisioned.

Accordingly, compounds and methods which can meet the need for high print fidelity with minimal linear distortion are desired.

## SUMMARY OF THE INVENTION

Embodiments of the present disclosure meet this need by providing actinically-curable compositions with minimal linear distortion and high print fidelity. The actinically-curable compositions of the present disclosure achieve this through the use of matched hydrogen bonding between the first and second components, and through the use of a third component with minimal homopolymer volumetric shrinkage upon curing.

The actinically-curable composition of the invention may comprise a first component, a second component, and a third component. The first component comprises one or more compounds having at least two (meth)acrylate functional groups and at least one hydrogen bond donor group comprising a bond selected from the group consisting of N-H bond, O-H bond and S-H bond. The second component comprises one or more compounds having at least two (meth)acrylate functional groups and no hydrogen bond donor groups. The third component comprises one or more compounds having formula (I):

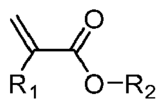
(I)

wherein:

- $R_1$ is hydrogen or methyl;
- $R_2$ is X-$R_3$ or $R_3$;
- X is $-(CR^aR^b)_p-*$, $-(CH_2-CH_2-O)_n-*$, or $-(CH_2-CH(CH_3)-O)_m-*$, and the symbol * represents the point of attachment to $R_3$;
- each $R^a$ and $R^b$ is independently selected from H or alkyl;
- p, n, and m, are independently from 1 to 10;
- $R_3$ is a cyclic moiety selected from one of formulas (II), (III), (IV), and (V):

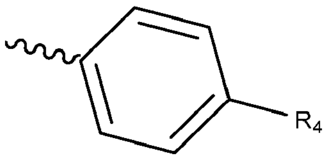 (II) 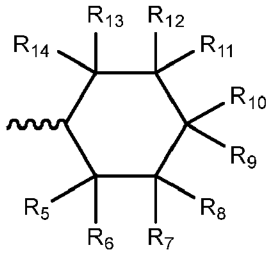 (III)

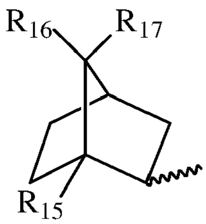 (IV) 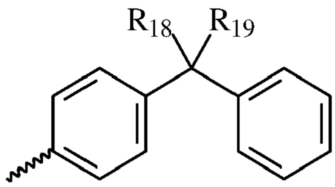 (V)

;

and

$R_4$ to $R_{19}$ are independently selected from the group consisting of hydrogen, ($C_6$-$C_{40}$) aryl, and ($C_1$-$C_{40}$) alkyl.

This summary is provided to introduce a selection of concepts that are further described in the detailed description. This summary is not intended to identify key or essential features of the claimed subject matter, nor is it intended to be used as an aid in limiting the scope of the claimed subject matter.

Additional features and advantages of the described embodiments will be set forth in the detailed description that follows. The additional features and advantages of the described embodiments will be, in part, readily apparent to those skilled in the art from that description or recognized by practicing the described embodiments, including the detailed description that follows as well as the drawings and the claims.

## BRIEF DESCRIPTION OF THE DRAWING

The following detailed description of specific embodiments of the present disclosure can be best understood when read in conjunction with the following drawing.

Figure 1(A) is a front view of the H-bar structure used in the linear distortion method described herein.

Figure 1(B) is a side view of the H-bar structure used in the linear distortion method described herein.

Figure 1(C) is a top view of the H-bar structure used in the linear distortion method described herein.

## DETAILED DESCRIPTION OF THE INVENTION

As described above, actinically-curable compositions which can achieve high print fidelity with minimal linear distortion are desired. Embodiments of the present disclosure meet this need by providing an actinically-curable composition with matched hydrogen bonding between the first and second components, and through the use of a third component with minimal homopolymer volumetric shrinkage upon curing.

## DEFINITIONS

The terms "(meth)acrylate," "(meth)acrylate group," and "(meth)acrylate functional group" mean a (meth)acryloyloxy group with formula (-O-C(=O)-C(R)=$CH_2$), where R is hydrogen or a methyl group. It should be understood that the term "(meth)acrylate" encompasses the terms methacrylate and acrylate.

The term "(meth)acrylate equivalent weight" refers to the molecular weight Mn of the compound divided by the number of (meth)acrylate groups.

The term "(meth)acrylate monomer or oligomers" refers to monomers or oligomers having at least one (meth)acrylate group.

The term "acrylate" refers to an acryloyloxy group having the general structure (-O-C(=O)-CH=$CH_2$).

The term "actinically-curable" means that when an actinically-curable composition is exposed to actinic radiation, such as ultraviolet light, the actinically-curable composition may polymerize.

The term "alkyl" means an optionally substituted monovalent saturated acyclic hydrocarbon group. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like. The term "($C_1$-$C_{40}$) alkyl" means an alkyl having 1 to 40 carbon atoms.

The term "cycloalkyl" means an optionally substituted monovalent hydrocarbon group comprising a non-aromatic ring. The cycloalkyl may contain a single non-aromatic ring or more than one non-aromatic ring. When the cycloalkyl comprises more than one more ring, the rings may be fused, bridged or linked via a covalent bond. Examples of cycloalkyl groups include cyclopentyl, cyclohexyl, isobornyl, dicyclopentanyl, tricyclodecane, adamantanyl, any of which may be optionally substituted.

The term "heterocycloalkyl" means an optionally substituted cycloalkyl wherein one or more of the ring atoms are independently replaced by a heteroatom selected from O, N or S. Examples of heterocycloalkyls include tetrahydrofuran, 1,3-dioxolane, tetrahydropyrane, 1,3-dioxane,

The term "aryl" means an optionally substituted monovalent aromatic group. The aryl may contain a single aromatic ring (i.e. phenyl) or more than one ring wherein at least one ring is aromatic. When the aryl comprises more than one more ring, the rings may be fused or linked via a covalent bond (for example biphenyl). Each aromatic ring may optionally comprise one to two additional fused rings (i.e. cycloalkyl, heterocycloalkyl or heteroaryl). Examples of aryls include phenyl, naphthyl, tetrahydronaphthyl, biphenyl, phenanthrenyl, naphthacenyl, fluorenyl, tetrahydrofluorenyl, indacenyl, hexahydroindacenyl, indenyl, dihydroindenyl, anthracenyl and octahydroanthracenyl. The term "($C_6$-$C_{40}$) aryl" means an aryl having 6 to 40 carbon atoms.

The term "heteroaryl" means an optionally substituted aryl wherein one or more of the ring atoms are independently replaced by a heteroatom selected from O, N or S.

The term « optionally substituted group » means that one or more hydrogen atoms of said group may independently be replaced by a substituent selected from alkyl, cycloalkyl, aryl, heteroaryl, alkoxy, alkylaryl, haloalkyl, hydroxy, halogen, isocyanate, nitrile, amine, oxo (=O), carboxylic acid, -C(=O)-R', -C(=O)-OR', -C(=O)NH-R', -NH-C(=O)R', -O-C(=O)-NH-R', -NH-C(=O)-O-R', -C(=O)-O-C(=O)-R' and -$SO_2$-NH-R', each R' being independently an optionally substituted group selected from alkyl, aryl and alkylaryl.

The term "homopolymer volumetric shrinkage" refers to the amount a given monomer shrinks upon cure when it is cured in the absence of other monomers. To determine the homopolymer volumetric shrinkage, the liquid density is determined, the solid density (i.e., after curing as set forth herein) is determined, then the difference of the solid density and the liquid density is divided by the liquid density, as follows:

$$Shrinkage\left(\%\right) = 100\ X\ \frac{Solid\ Density - Liquid\ Density}{Liquid\ Density}.$$

The term "hydrogen bond acceptor group" refers to a functional group which includes an electronegative atom bearing a lone pair of electrons, such as nitrogen (N), oxygen (O), sulfur (S) or fluorine (F), that can accept a hydrogen bond from another atom.

The term "hydrogen bond acceptor group equivalent weight" refers to the number average molecular weight Mn of the compound divided by the number of hydrogen bond acceptor groups in the compound. The number of hydrogen bond acceptor groups in the compound corresponds to the number of nitrogen, oxygen, sulfur or fluorine atoms that can accept hydrogen bonding. For example, 1,4-butanediol di(meth)acrylate comprises two ester bonds and each ester bond comprises one oxygen atom that can accept hydrogen bonding. The hydrogen bond acceptor group equivalent weight of 1,4-butanediol di(meth)acrylate is therefore equal to 113.13 g/eq (226.27 / 2 = 113.13). Tri(propylene glycol) diacrylate comprises two ester bonds and two ether bonds and each ester bond and ether bond comprises one oxygen atom that can accept hydrogen bonding. The hydrogen bond acceptor group equivalent weight of tri(propylene glycol) diacrylate is therefore equal to 75.10 g/eq (300.35 / 4 = 75.10). For the avoidance of doubt, the Mn is to be divided by the number of functional groups in the compound, not the number of acceptor atoms, to obtain the hydrogen bond acceptor group equivalent weight. This would be important, for example, if a single functional group has multiple acceptor atoms, such as urea which has two nitrogen atoms. In that case, if the compound has two urea groups, the Mn would be divided by 2 to obtain the hydrogen bond acceptor group equivalent weight.

The term "hydrogen bond donor group" refers to a functional group which includes at least one hydrogen atom bonded to an electronegative atom, such as nitrogen (N), oxygen (O), sulfur (S) or fluorine (F). As used herein, the hydrogen bond donor group may refer to a functional group comprising a bond selected from N-H bond, O-H bond and S-H bond. It should be understood that while all hydrogen bond donor groups are also hydrogen bond acceptor groups, not all hydrogen bond acceptor groups are hydrogen bond donor groups.

The term "methacrylate" means a methacryloyloxy group with formula $(-O-C(=O)-C(CH_3)=CH_2)$.

The term "monomer" refers to a molecule with one or more polymerizable functional groups. The monomer has a single molecular weight, typically below 1000 g/mol, preferably 100 to 950 g/mol. As is recognized, commercial products of a particular monomer may contain impurities or other chemical species.

The term "number-average molecular weight" or "$M_n$" refers to the statistical average molecular weight of the polymer chains in a sample or grouping. Number-average molecular weights reported herein are determined using a size exclusion chromatography (SEC) using polymethyl (meth)acrylate reference standards and tetrahydrofuran as the solvent, unless expressly noted otherwise.

The term "oligomer" refers to molecules with a distribution of molecular weights and typically having one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol. As is recognized, commercial products of a particular oligomer may contain impurities or other chemical species.

The term "photo-initiator" refers to a compound which undergoes a photoreaction on absorption of light, producing reactive species. The reactive species which are generated then initiate curing (polymerization) of the reactive components of the curable composition, e.g., the first through fourth components. Generally, when compounds present in the reactive components contain carbon-carbon double bonds, such polymerization (curing) involves reaction of such carbon-carbon double bonds.

The term "wt. %" means weight percentage. Unless otherwise mentioned, the weight percentages in a compound or a composition are expressed relative to the weight of the compound, respectively of the composition.

## EMBODIMENTS

The actinically-curable composition of the invention comprises a first component, a second component, and a third component. The first component comprises one or more compounds having at least two (meth)acrylate functional groups and at least one hydrogen bond donor group. The second component comprises one or more compounds having at least two (meth)acrylate functional groups and no hydrogen bond donor groups. The third component comprises one or more compounds having a single (meth)acrylate functional group and a cyclic moiety.

## First Component

The actinically-curable composition includes a first component comprising or consisting of one or more compounds having at least two (meth)acrylate functional groups and at least one hydrogen bond donor group selected from the group consisting of N-H bond, O-H bond and S-H bond.

The first component may comprise or consist of one or more monomers having at least two (meth)acrylate functional groups and at least one hydrogen bond donor group, one or more oligomers having at least two (meth)acrylate functional groups and at least one hydrogen bond donor group, or a mixture such compounds.

The one or more compounds of the first component have at least two (meth)acrylate functional groups, such as acrylate functional groups, methacrylate functional groups, or both. For example, the one or more compounds of the first component may have from two to four (meth)acrylate functional groups. In some specific embodiments, the one or more compounds of the first component may be di-functional (having two (meth)acrylate functional groups), tri-functional (having three (meth)acrylate functional groups), or tetra-functional (having four (meth)acrylate functional groups). In some embodiments, the one or more compounds of the first component may be di-functional.

The one or more compounds of the first component may have a (meth)acrylate equivalent weight of from 200 grams per equivalent (g/eq) to 500 g/eq. For example, the one or more compounds of the first component may have a (meth)acrylate equivalent weight of from 200 g/eq to 400 g/eq, from 200 g/eq to 300 g/eq, from 200 g/eq to 280 g/eq, from 225 g/eq to 500 g/eq, from 225 g/eq to 400 g/eq, from 225 g/eq to 300 g/eq, from 225 g/eq to 280 g/eq, or any subset thereof.

The one or more compounds of the first component have at least one hydrogen bond donor group. For example, the one or more compounds of the first component may have two, three, four, five, from 1 to 5, from 1 to 4, from 1 to 3, from 1 to 2, from 2 to 5, from 2 to 4, from 2 to 3, or any subset thereof, hydrogen bond donor groups. As used herein, a hydrogen bond donor group comprises a bond selected from the group consisting of N-H bond, O-H bond and S-H bond. The N-H bond may, for example, be included in a carbamate group, an amide group, an imine group or a urea group, preferably in a carbamate group or a urea group. The O-H bond may, for example, be included in a hydroxyl group or a carboxyl group. The S-H bond may, for example, be included in a thiol group or a thioacid group. In some embodiments, the at least one hydrogen bond donor group may comprise a bond selected from the group consisting of N-H bond and O-H bond.

The one or more compounds of the first component may be selected from an epoxy (meth)acrylate, a urethane

(meth)acrylate and mixtures thereof.

Examples of suitable epoxy (meth)acrylates include the reaction products of an epoxy resin having at least two epoxy groups with a (meth)acrylating agent such as (meth)acrylic acid, (meth)acrylic anhydride or (meth)acryloyl chloride. The epoxy resin may, in particular, be selected from 1,2,3,4-diepoxybutane; 1,2,4,5-diepoxypentane; 1,2,5,6-diepoxyhexane; 1,2,7,8-diepoxyoctane; 1,2,9,10-diepoxydecane; a glycidyl ether or ester of a polyol including ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-heptanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a poly(ethylene glycol) diglycidyl ether, a poly(propylene glycol) diglycidyl ether, a poly(trimethylene glycol) diglycidyl ether, a poly(tetramethylene glycol) diglycidyl ether, a poly(ethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, bisphenol A, B, F or S diglycidyl ether, hydrogenated bisphenol A, B, F or S diglycidyl ether, diglycidyl phthalate, diglycidyl terephthalate, diglycidyl isophthalate; an epoxidized vegetable oil (such as epoxidized soybean oil and epoxidized linseed oil); epoxidized polybutadiene; triglycidyl isocyanurate, and combinations thereof.

Examples of suitable urethane (meth)acrylates include the reaction products of a polyisocyanate, a hydroxyl-functionalized (meth)acrylate and optionally a polyol or multiple polyols serving as chain extenders. The polyisocyanate may, in particular, be selected from isophorone diisocyanate, toluene diisocyanate, hydrogenated methylenediphenyl diisocyanate, hexamethylene diisocyanate, 2,2,4-trimethyl hexamethylene diisocyanate, as well as oligomers of the above isocyanates. The hydroxyl-functionalized (meth)acrylate may, in particular, be selected from 2-hydroxyethyl(meth)acrylate, 2-hydroxypropyl(meth)acrylate, 4-hydroxybutyl(meth)acrylate, and/or 3-hydroxypropyl(meth)acrylate. The optional polyol may, in particular, be selected from a polyester polyol, a polyether polyol, a polycarbonate polyol, a polycaprolactone polyol, a polyorganosiloxane polyol (e.g., a polydimethylsiloxane polyol), or a polydiene polyol (e.g., a polybutadiene polyol), and combinations thereof. These three reactants may form a chain-extended urethane (meth)acrylate having at least two (meth)acrylate functional groups.

In some embodiments, the one or more compounds of the first component may include: bisphenol A diglycidyl ether di(meth)acrylate, epoxidized soya bean oil (meth)acrylates, epoxy novolac (meth)acrylates, trimethylolpropane triglycidyl ether tri(methacrylate) and butanediol diglycidyl ether and their polymers and oligomers formed by reaction with an isocyanate, such as isophorone diisocyanate, toluene diisocyanate, hydrogenated methylenediphenyl diisocyanate, hexamethylene diisocyanate, 2,2,4-trimethyl hexamethylene diisocyanate or oligomers of these isocyanates. Also suitable as compounds of the first component are the adducts of 2-hydroxyethyl(meth)acrylate, 2-hydroxypropyl(meth)acrylate, 4-hydroxybutyl(meth)acrylate, and/or 3-hydroxypropyl(meth)acrylate with any of the above-mentioned isocyanate compounds.

Exemplary compounds of the first component are given in Table 1 below. The (meth)acrylate equivalent weight of these compounds ranges from 225 to 280 g/equivalent.

Table 1

| Compound | Structure | Manufacturer | H-bond donor group |
|---|---|---|---|
| CN154 | Bisphenol A diglycidyl ether dimethacrylate (Bis-GMA) | Arkema | hydroxyl O-H |
| CN1964 | Urethane dimethacrylate (UDMA) | Arkema | carbamate N-H |
| NTX 14901 | Urethane dimethacrylate (IPDI-HEMA) | Arkema | carbamate N-H |
| PRO4257 | Urethane diacrylate (IPDI-HEA) | Arkema | carbamate N-H |
| CN989 | Multifunctional aliphatic urethane acrylate | Arkema | Carbamate N-H |

The actinically-curable composition may comprise from 10 % to 70 % by weight of the first component, based on the total weight of the actinically-curable composition. For example, the actinically-curable composition may comprise

from 10 % to 65%, from 10% to 60%, from 10% to 55%, from 10 % to 50%, from 15% to 65%, from 20% to 60%, from 20 % to 55%, or any subset thereof, by weight of the first component, based on the total weight of the actinically-curable composition. In some specific embodiments, the actinically-curable composition may comprise from 15 % to 60% by weight of the first component, based on the total weight of the actinically-curable composition.

## Second Component

The actinically-curable composition includes a second component comprising or consisting of one or more compounds having at least two (meth)acrylate functional groups and no hydrogen bond donor group.

The second component may comprise or consist of one or more monomers having at least two (meth)acrylate functional groups and no hydrogen bond donor group, one or more oligomers having at least two (meth)acrylate functional groups and no hydrogen bond donor group, or a mixture such compounds.

The one or more compounds of the second component have at least two (meth)acrylate functional groups, such as acrylate functional groups, methacrylate functional groups, or both. For example, the one or more compounds of the second component may have from two to four (meth)acrylate functional groups, may be di-functional (having two (meth)acrylate functional groups), may be tri-functional (having three (meth)acrylate functional groups), or may be tetra-functional (having four (meth)acrylate functional groups). In some embodiments, the one or more compounds of the second component may be di-functional.

The one or more compounds of the second component have no hydrogen bond donor groups. Thus, consistent with the definition of hydrogen bond doner group used herein, the one or more compounds of the second component have no functional group comprising a bond selected from the group consisting of N-H bond, O-H bond and S-H bond. By having 'no hydrogen bond donor groups,' it is intended that the one or more compounds of the second component either have no detectable hydrogen bond donor groups at all or have some hydrogen bond donor groups but in such a small amount and/or such weak donor groups that their presence does not adversely impact the effects achieved by the formulations of the present invention.

The one or more compounds of the second component comprise at least two (meth)acrylate functional groups but no hydrogen bond donor groups. Accordingly, the one or more compounds of the second component comprise at least two hydrogen bond acceptor groups, namely the carbonyl of the ester bonds of each (meth)acrylate group. The one or more compounds of the second component may comprise additional hydrogen bond acceptor groups, which may comprise a heteroatom selected from nitrogen, oxygen, sulfur and fluorine provided that said heteroatom is not covalently linked to a hydrogen atom. The nitrogen atom may, for example, be comprised in a N,N-disubstituted carbamate group, a tertiary amine group, a N,N-disubstituted amide group, a N-substituted imine group or a N,N,N'N'-tetrasubstituted urea group. The oxygen atom may, for example, be included in an ether group, a carbonyl group (ketone or aldehyde) or an ester group. The sulfur atom may, for example, be included in a thioether group, a thiocarbonyl group or a thioester group. The fluoride atom may, for example, be included in a fluoroalkyl group or fluoroaryl group.

Thus, the one or more compounds of the second component comprise a number of hydrogen bond acceptor groups that is equal to or higher than the number of (meth)acrylate groups carried by each compound. In a preferred embodiment, the one or more compounds of the second component comprise at least two hydrogen bond acceptor groups comprising an oxygen atom included in a (meth)acrylate group and optionally one or more hydrogen bond acceptor groups comprising an oxygen atom included in an ether group.

The one or more compounds of the second component may have a hydrogen bond acceptor group equivalent weight of from 50 g/eq to 200 g/eq. For example, the one or more compounds of the second component may have a hydrogen bond acceptor group equivalent weight of from 50 g/eq to 175 g/eq, from 50 g/eq to 150 g/eq, from 50 g/eq to 125 g/eq, from 50 g/eq to 110 g/eq, from 60 g/eq to 200 g/eq, from 60 g/eq to 150 g/eq, from 60 g/eq to 125 g/eq, from 60 g/eq to 120 g/eq, from 65 g/eq to 200 g/eq, from 65 g/eq to 115 g/eq, or any subset thereof.

In a preferred embodiment, the one or more compounds of the second component may be selected from (meth)acrylate esters of polyols (provided that the polyol is fully esterified with (meth)acrylate groups so that the resulting compound does not comprise residual hydroxyl groups). Exemplary (meth)acrylate esters of polyols include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; 1,2-propylene glycol di(meth)acrylate; di(1,2-propylene glycol) di(meth)acrylate; tri(1,2-propylene glycol) di(meth)acrylate; tetra(1,2-propylene glycol) di(meth)acrylate; poly(1,2-propylene glycol) di(meth)acrylate; 1,3-propylene glycol di(meth)acrylate; di(1,3-propylene glycol) di(meth)acrylate; tri(1,3-propylene glycol) di(meth)acrylate; tetra(1,3-propylene glycol) di(meth)acrylate; poly(1,3-propylene glycol) di(meth)acrylate; 1,4-butylene glycol di(meth)acrylate; di(1,4-butylene glycol) di(meth)acrylate; tri(1,4-butylene glycol) di(meth)acrylate; tetra(1,4-butylene glycol) di(meth)acrylate; poly(1,4-butylene glycol) di(meth)acrylate; 1,2-butanediol di(meth)acrylate; 2,3-butanediol di(meth)acrylate; 1,3-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 3-methyl-1,5-pentanediol di(meth)acrylate; polybutadiene di(meth)acrylate; cyclohexane-1,4-dimethanol di(meth)acrylate; isosorbide di(meth)acrylate, tricyclodecane dimethanol di(meth)acrylate; glyceryl tri(meth)acrylate; trimethylolethane tri(meth)acrylate; trimethylolpropane tri(meth)acrylate; pentaerythritol tetra(meth)acrylate, di(trimethylolpropane) tetraacrylate, tris (2-hydroxyethyl) isocyanurate tri(meth)acrylate; as well as the alkoxylated (e.g., ethoxylated and/or propoxylated) derivatives thereof; and combinations thereof.

In some embodiments, the one or more compounds of the second component may include: ethylene glycol di(meth)acrylate; diethylene glycol di(meth)acrylate; triethylene glycol di(meth)acrylate; tetraethylene glycol di(meth)acrylate; polyethylene glycol di(meth)acrylate; 1,2-propylene glycol di(meth)acrylate; di(1,2-propylene glycol) di(meth)acrylate; tri(1,2-propylene glycol) di(meth)acrylate; tetra(1,2-propylene glycol) di(meth)acrylate; poly(1,2-propylene glycol) di(meth)acrylate; 1,4-butylene glycol di(meth)acrylate; di(1,4-butylene glycol) di(meth)acrylate; tri(1,4-butylene glycol) di(meth)acrylate; tetra(1,4-butylene glycol) di(meth)acrylate; and poly(1,4-butylene glycol) di(meth)acrylate; and combinations thereof.

Exemplary compounds of the second component are given in Table 2 below. The (meth)acrylate equivalent weight of these compounds ranges from 65 to 115 g/equivalent.

Table 2

| Compound | Structure/Description | Manufacturer | H-bond acceptor |
|---|---|---|---|
| SR210 | propylene glycol dimethacrylate | Arkema | Carbonyl O atoms. |
| SR306 | tripropylene glycol diacrylate | Arkema | Ether and carbonyl O atoms. |
| SR214 | 1 ,4-butanediol dimethacrylate | Arkema | Carbonyl O atoms. |

The actinically-curable composition may comprise from 10 wt. % to 70 wt. % of the second component, based on the total weight of the actinically-curable composition. For example, the actinically-curable composition may comprise from 10 wt. % to 60 wt. %, from 10 wt. % to 50 wt. %, from 10 wt. % to 40 wt. %, from 10 wt. % to 35 wt. %, from 10 wt. % to 30 wt. %, from 10 wt. % to 25 wt. %, from 12.5 wt. % to 70 wt. %, from 12.5 wt. % to 50 wt. %, from 12.5 wt. % to 35 wt. %, from 12.5 wt. % to 30 wt. %, from 15 wt. % to 70 wt. %, from 15 wt. % to 50 wt. %, from 15 wt. % to 35 wt. %, from 15 wt. % to 25 wt. %, or any subset thereof of the second component, based on the total weight of the actinically-curable composition.

## Third Component

The actinically-curable composition includes a third component comprising or consisting of one or more compounds having a single (meth)acrylate functional group and a cyclic moiety as described herein.

The third component may comprise or consist of one or more monomers having a single (meth)acrylate functional group and a cyclic moiety as described herein.

The one or more compounds of the third component have a single (meth)acrylate functional group, such as an acrylate functional group or a methacrylate functional group.

The cyclic moiety may be selected from an optionally substituted aryl, an optionally substituted heteroaryl, an optionally substituted cycloalkyl or an optionally substituted heterocycloalkyl; preferably an optionally substituted aryl or an optionally substituted cycloalkyl; more preferably an optionally substituted phenyl, an optionally substituted cyclohexyl, an optionally substituted bicyclo[2.2.1]heptyl, or an optionally substituted methylenediphenyl. In particular, the cyclic moiety of the one or more compounds of the third component is one of formulas (II), (III), (IV), and (V):

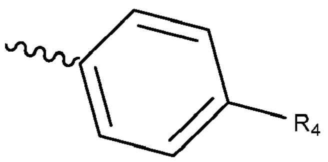

(II)

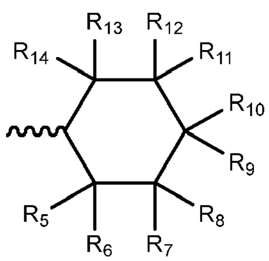

(III)

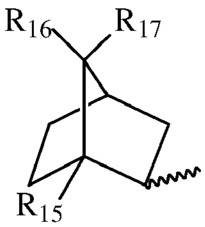 (IV) 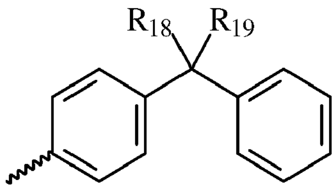 (V)

In each of formulas (II), (III), (IV), and (V), $R_4$ to $R_{19}$ are independently selected from the group consisting of: hydrogen, ($C_6$-$C_{40}$) aryl, and ($C_1$-$C_{40}$) alkyl.

Alternatives to formulas (II), (III), (IV), and (V) as $R_3$ include: (2,2-dimethyl-1,3-dioxolan-4-yl)methyl (meth)acrylate (IPG(M)A); (2-ethyl-2-methyl-1,3-dioxolan-4-yl)methyl acrylate (MEDOL-10); glycerol formal methacrylate (Glyfoma); tricyclodecane methanol mono(meth)acrylate; and adamantan-1-yl acrylate.

The one or more compounds of the third component have formula (I):

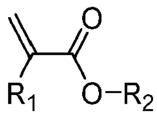 (I)

wherein:

$R_1$ may be a hydrogen or methyl;
$R_2$ may be X-$R_3$ or $R_3$, and $R_3$ is the cyclic moiety of formulas (II), (III), (IV), and (V) listed above;
X may be $-(CR^aR^b)_p-$, $-(CH_2-CH_2-O)_n-*$, or $-(CH_2-CH(CH_3)-O)_m-*$, and the symbol
* represents the point of attachment to $R_3$.

Where X has the formula $-(CR^aR^b)_p-$, each $R^a$ and $R^b$ may independently be selected from H or alkyl and p may be from 1 to 10. For example, each $R^a$ and $R^b$ may independently be H, methyl or ethyl and p may be 1, 2, 3, 4, 5, 6, 7, 8, 9, 10, from 1 to 10, from 2 to 10, from 3 to 10, from 5 to 10, from 7 to 10, from 1 to 8, from 1 to 6, from 1 to 4, from 1 to 2, from 2 to 8, from 4 to 6, or any subset thereof.

Where X has the formula $-(CH_2-CH_2-O)_n-*$, n may be from 1 to 10. For example, n may be 1, 2, 3, 4, 5, 6, 7, 8, 9, 10, from 1 to 10, from 2 to 10, from 3 to 10, from 5 to 10, from 7 to 10, from 1 to 8, from 1 to 6, from 1 to 4, from 1 to 2, from 2 to 8, from 4 to 6, or any subset thereof.

Where X has the formula $-(CH_2-CH(CH_3)-O)_m-*$, m may be from 1 to 10. For example, m may be 1, 2, 3, 4, 5, 6, 7, 8, 9, 10, from 1 to 10, from 2 to 10, from 3 to 10, from 5 to 10, from 7 to 10, from 1 to 8, from 1 to 6, from 1 to 4, from 1 to 2, from 2 to 8, from 4 to 6, or any subset thereof.

The ($C_1$-$C_{40}$) alkyl of the third component may be a ($C_1$-$C_{30}$) alkyl, a ($C_1$-$C_{20}$) alkyl, a ($C_1$-$C_{10}$) alkyl, a ($C_1$-$C_5$) alkyl, a ($C_1$-$C_4$) alkyl, a ($C_1$-$C_3$) alkyl, a ($C_1$-$C_2$) alkyl, a ($C_2$-$C_{40}$) alkyl, a ($C_2$-$C_{30}$) alkyl, a ($C_2$-$C_{20}$) alkyl, a ($C_2$-$C_{10}$) alkyl, a ($C_2$-$C_5$) alkyl, a ($C_3$-$C_{40}$) alkyl, a ($C_4$-$C_{40}$) alkyl, a ($C_5$-$C_{40}$) alkyl, a ($C_{10}$-$C_{40}$) alkyl, a ($C_{15}$-$C_{40}$) alkyl, a ($C_{20}$-$C_{40}$) alkyl, a ($C_5$-$C_{35}$) alkyl, or any subset thereof.

The ($C_6$-$C_{40}$) aryl of the third component may have from 8 to 40 carbon atoms, from 10 to 40 carbon atoms, from 12 to 40 carbon atoms, from 14 to 40 carbon atoms, from 6 to 30 carbon atoms, from 6 to 20 carbon atoms, from 6 to 12 carbon atoms, from 6 to 8 carbon atoms, exactly 7 carbon atoms, or exactly 6 carbon atoms. In some embodiments, the ($C_6$-$C_{40}$) aryl of the third component may comprise phenyl, naphthyl, biphenyl, phenanthrenyl and naphthacenyl.

The third component may comprise at least one compound of formula (I) wherein $R_3$ is a cyclic moiety of formula (II). For example, the third component may comprise phenoxyethyl (meth)acrylates, such as phenoxyethyl methacrylate or phenoxyethyl acrylate; polyethoxylated phenyl (meth)acrylates, such as a polyethoxylated phenyl methacrylate or a polyethoxylated phenyl acrylate, 2-phenylethyl (meth)acrylates such as 2-phenylethyl methacrylate or 2-phenylethyl acrylate, biphenyl (meth)acrylates, such as biphenyl methacrylate or biphenyl acrylate; benzyl (meth)acrylates, such as benzyl acrylate or benzyl methacrylate, or combinations of these.

The third component may comprise at least one compound of formula (I) wherein $R_3$ is a cyclic moiety of formula (III). For example, the third component may comprise cyclohexyl (meth)acrylates, such as cyclohexyl methacrylate or cyclohexyl acrylate, 4-tert-butylcyclohexyl (meth)acrylates, such as 4-tert-butylcyclohexyl methacrylate or 4-tert-butylcyclohexyl acrylate, 3,3,5-trimethylcyclohexyl (meth)acrylates such as 3,3,5-trimethylcyclohexyl methacrylate or 3,3,5-trimethylcyclohexyl acrylate; or combinations of these.

The third component may comprise at least compound of formula (I) wherein $R_3$ is a cyclic moiety of formula (IV). For example, the third component may comprise isobornyl (meth)acrylates, such as isobornyl methacrylate or isobornyl acrylate, norbornyl (meth)acrylates, such as norbornyl methacrylate or norbornyl acrylate, or combinations of these.

The third component may comprise at least one compound of formula (I) wherein $R_3$ is a cyclic moiety of formula (V). For example, the third component may comprise ethoxylated cumylphenol (meth)acrylates, such as ethoxylated cumylphenol methacrylate, ethoxylated cumylphenol acrylate, or both.

Exemplary compounds of the third component are given in Table 3 below.

Table 3

| Compound | Structure/Description | Manufacturer | Homopolymer volumetric Shrinkage (%) |
|---|---|---|---|
| SR590 | Ethoxylated cumylphenol acrylate | Arkema | 5.2 |
| SR339 | Phenoxyethyl acrylate | Arkema | |
| SR340 | Phenoxyethyl methacrylate | Arkema | |
| SR506 | Isobornyl acrylate | Arkema | 7.6 |
| SR423 | Isobornyl methacrylate | Arkema | 6.4 |
| NTX14851 | Ethoxylated cumylphenol methacrylate | Arkema | 6.7 |
| A-LEN-10 | p-Biphenyl methacrylate | Shin-Nakamura Chemicals | 6.7 |

The one or more compounds of the third component may have a homopolymer volumetric shrinkage upon curing of less than 8 %. For example, the one or more compounds of the third component may have a homopolymer volumetric shrinkage upon curing of less than 7 %, less than 6 %, less than 5 %, less than 4 %, less than 3 %, from 1 % to 8 %, from 1 % to 7 %, from 3 % to 7 %, from 5 % to 7 %, or any subset thereof.

The actinically-curable composition may comprise from 5 wt. % to 45wt. % of the third component, based on the total weight of the actinically-curable composition. For example, the actinically-curable composition may comprise from 5 wt. % to 40wt. %, from 5 wt. % to 35 wt. %, from 5 wt. % to 30 wt. %, from 10 wt. % to 45 wt. %, from 10 wt. % to 30 wt. %, from 15 wt. % to 45 wt. %, from 15wt. % to 40 wt. %, from 15wt. % to 35wt. %, from 15 wt. % to 30wt. %, or any subset thereof, of the third component, based on the total weight of the actinically-curable composition. In some specific embodiments, the actinically-curable composition may comprise from 20 wt. % to 30 wt. % of the third component, based on the total weight of the actinically-curable composition.

## Fourth Component

The actinically-curable composition may further comprise a fourth component. The fourth component may comprise or consist of one or more compounds having at least two (meth)acrylate functional groups.

The fourth component may comprise or consist of one or more oligomers having at least two (meth)acrylate functional groups, or a mixture such compounds.

The one or more compounds of the fourth component have at least two (meth)acrylate functional groups, such as acrylate functional groups, methacrylate functional groups, or both. In some specific embodiments, the one or more compounds of the fourth component may be di-functional, tri-functional, or tetra-functional.

The one or more compounds of the fourth component have a (meth)acrylate equivalent weight of from 500 g/eq to 1500 g/eq. For example, the one or more compounds of the fourth component may have a (meth)acrylate equivalent weight of from 500 g/eq to 1400 g/eq, from 500 g/eq to 1200 g/eq, from 500 g/eq to 1000 g/eq, or any subset thereof.

The one or more compounds of the fourth component may have a number-average molecular weight of at least 500 g/mol. For example, the one or more compounds of the fourth component may have a number-average molecular weight of at least 600 g/mol, at least 750 g/mol, at least 1000 g/mol, at least 1250 g/mol, at least 1500 g/mol, from 500 g/mol to 15,000 g/mol, from 500 g/mol to 5,000 g/mol, from 500 g/mol to 2500 g/mol, from 500 g/mol to 1000 g/mol, from 500 g/mol to 750 g/mol, or any subset thereof.

It should be understood that no compounds may be considered as both part of the first, second, or third component and part of the fourth component. Accordingly, if a compound meets the definition of any of the first through

third components, it is considered as part of that component and not part of the fourth component.

Suitable fourth components may include: CN1970, CN970, CN1969, CN1968, CN971, CN972, CN991, CN981, and CN980, each of which is available from Sartomer Americas.

Exemplary oligomers of the fourth component are given in Table 4 below. The (meth)acrylate equivalent weight of these compounds range between 500 to 1,200 g/equivalent.

Table 4

| Compound | Structure/Description | Manufacturer |
|---|---|---|
| CN1970 | aliphatic urethane dimethacrylate | Arkema |
| CN981 | Aliphatic urethane diacrylate | Arkema |
| | | |
| CN970 | multifunctional aromatic urethane acrylate | Arkema |
| CN971 | aromatic urethane acrylate | Arkema |
| CN972 | aromatic urethane acrylate | Arkema |
| CN996 | aliphatic urethane acrylate | Arkema |

When present, the fourth component is present in at least about 10% by weight based on the total weight of the actinically-curable composition. The actinically-curable composition may comprise from 10% to 45% by weight of the fourth component, based on the total weight of the actinically-curable composition. For example, the actinically-curable composition may comprise from 10% to 40%, from 10% to 35%, from 10% to 30%, from 15% to 45%, or any subset thereof, by weight of the fourth component, based on the total weight of the actinically-curable composition. In some specific embodiments, the actinically-curable composition may comprise from 15% to 35 %, by weight of the fourth component, based on the total weight of the actinically-curable composition.

## Additional Components

The actinically-curable composition may further include a photo-initiator. Photo-initiators are generally divided into two classes, depending on their mode of action: radical photo-initiators and cationic photo-initiators. Cationic photo-initiators are often salts, for instance iodonium and sulfonium salts. When these salts are irradiated with UV-light, they undergo homolytic bond cleavage forming radicals that react with a proton donor to give a Brønsted or Lewis acid. The generated acid then initiates the polymerization. Radical photo-initiators can adopt two different modes of action, and are classified by mode of action as Norrish Type I and Norrish Type II photo-initiators. In some embodiments, the actinically-curable composition comprises a radical photo-initiator, such as a Norrish Type I or Norrish Type II photo-initiator.

As used herein, the term "activity" with reference to Norrish Type I and Norrish Type II activity is intended to relate to Norrish photo-initiation and analogous reactions. For instance, a photo-initiator having Norrish Type I activity would be a photo-initiator characterized by a cleavage reaction into two radical fragments of the original photo-initiator on exposure to UV light. For an initiator having Norrish Type II activity, exposure to UV light causes the abstraction of an atom, such as hydrogen, to generate the radical.

Non-limiting types of radical photo-initiators suitable for use in the curable compositions of the present disclosure include, for example, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable radical photo-initiators may include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl] -2-morpholinopropanone-1, 2-hydroxy-2-methyl-1-phenyl-propanone, oligomeric α-hydroxy ketone, benzoyl phosphine oxides, phenyl-

bis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, suitable photo-initiators may include a benzophenone (such as SpeedCure BP, SpeedCure 7005, SpeedCure 7006), a thioxanthone (such as SpeedCure 7010, SpeedCure ITX), an $\alpha$-hydroxy acetophenone, an acylphosphine oxide (such as SpeedCure BPO, SpeedCure TPO, SpeedCure TPO-L); each of which is available from Sartomer Americas.

The actinically-curable compositions may include up to 15 wt. % of the photo-initiator, based on the total weight of the actinically-curable composition. For example, the actinically-curable composition may include from 0.1 wt. % to 15 wt. %, from 0.1 wt. % to 10 wt. %, from 0.1 wt. % to 8 wt. %, from 0.1 wt. % to 6 wt. %, from 0.1 wt. % to 4 wt. %, from 0.1 wt. % to 3 wt. %, from 0.1 wt. % to 2 wt. %, from 0.1 wt. % to 1.5 wt. %, from 0.1 wt. % to 1 wt. %, from 0.1 wt. % to 0.75 wt. %, from 0.1 wt. % to 0.5 wt. %, from 0.5 wt. % to 10 wt. %, from 0.5 wt. % to 5 wt. %, from 0.5 wt. % to 2.5 wt. %, from 0.5 wt. % to 2 wt. %, from 0.5 wt. % to 1.5 wt. %, from 0.5 wt. % to 1 wt. %, or any subset thereof, of the photo-initiator, based on the total weight of the actinically-curable composition.

The curable compositions of the present disclosure may optionally contain one or more additives instead of or in addition to the above-mentioned components. Such additives include, but are not limited to, antioxidants, ultraviolet absorbers, photo stabilizers, foam inhibitors, flow or leveling agents, colorants, pigments, dispersants (wetting agents), slip additives, fillers (other than or in addition to inorganic nanoparticles), thixotropic agents, matting agents, accelerators, adhesion promoters (such as acidic adhesion promoters), thermoplastics and other types of polymers (other than or in addition to the above-described block copolymers), waxes or other various additives, including any of the additives conventionally utilized in the coating, sealant, adhesive, molding or ink arts.

## Actinically-Curable Composition

The actinically-curable composition may have an uncured viscosity of from 150 cP to 2000 cP. For example, the actinically-curable composition may have an uncured viscosity of from 200 cP to 2000 cP, from 150 cP to 1800 cP, from 150 cP to 1600 cP, from 150 cP to 1400 cP, from 150 cP to 1200 cP, from 150 cP to 1000 cP, from 150 cP to 800 cP, from 150 cP to 600 cP, from 150 cP to 400 cP, from 300 cP to 2000 cP, from 500 cP to 2000 cP, from 750 cP to 2000 cP, from 1000 cP to 2000 cP, from 1250 cP to 2000 cP, from 1500 cP to 2000 cP, from 1800 cP to 2000 cP, from 300 cP to 1800 cP, from 500 cP to 1500 cP, or any subset thereof. Uncured viscosity may be measured at 25 °C, using spindle number 27 operating between 20 and 75% of the instrument's maximum torque output.

The actinically-curable composition may have a volumetric shrinkage upon cure of less than 10 %. For example, the actinically curable composition may have a volumetric shrinkage upon cure of less than 9 %, less than 8 %, or even less than 7%. It should be understood that volumetric shrinkage of the actinically-curable composition upon cure may be determined according to the procedure outlined in the Measurement Methods section.

## Actinically-Cured Composition

The present disclosure includes an actinically-cured composition comprising the product of actinically curing the actinically-curable composition. As described below, the actinically-curable composition may be cured by exposing the actinically-curable composition to actinic radiation, and optionally heat. The actinically-curable composition may be partially cured during the 3D printing process to form a green composition. As described below, the green composition may then be post-cured to form a post-cured composition. It should be understood that the actinically-cured composition may include both the green composition and the post-cured composition. Each of the tensile strength, elongation at break, and Young's modulus can be determined according to ASTM D638-14.

The green composition may have a tensile strength of from 19 MPa to 45MPa. For example, the green composition may have a tensile strength of from 19 MPa to 40 MPa, from 19 MPa to 35 MPa, from 19 MPa to 30 MPa, from

19 MPa to 25 MPa, from 25 MPa to 40 MPa, from 30 MPa to 40 MPa, from 35 MPa to 40 MPa, from 25 MPa to 35 MPa, or any subset thereof.

The green composition may have a Young's modulus of at least 200 MPa. For example, the green composition may have a Young's modulus of at least 250 MPa, at least 300 MPa, at least 400 MPa, at least 500 MPa, at least 600 MPa, at least 700 MPa, at least 800 MPa, at least 900 MPa, at least 1000 MPa, or at least 1200 MPa. Without being limited by theory, it has been found that both volumetric shrinkage and green Young's modulus correlate with linear distortion. In particular, low green Young's modulus values can result in excessive linear distortion, even with low volumetric shrinkage.

The green composition may have a Young's modulus of from 200 MPa to 1800 MPa, from 525 MPa to 1800 MPa. For example, the green composition may have a Young's modulus of from 525 MPa to 1500 MPa, from 525 MPa to 1200 MPa, from 525 MPa to 800 MPa, from 700 MPa to 1800 MPa, from 1000 MPa to 1800 MPa, from 1300 MPa to 1800 MPa, from 1600 MPa to 1800 MPa, or any subset thereof.

The post-cured composition may have a tensile strength of from 50 MPa to 80 MPa. For example, the post-cured composition may have a tensile strength of from 50 MPa to 75 MPa, from 50 MPa to 70 MPa, from 50 MPa to 65 MPa, from 50 MPa to 60 MPa, from 55 MPa to 80 MPa, from 60 MPa to 80 MPa, from 70 MPa to 80 MPa, or any subset thereof.

The post-cured composition may have an elongation at break of from 4 % to 15 %. For example, the post-cured composition may have an elongation at break of from 4 % to 12 %, from 4 % to 9 %, from 4 % to 6 %, from 7 % to 15 %, from 10 % to 15 %, from 12 % to 15 %, or any subset thereof.

The post-cured composition may have a Young's modulus of from 2700 MPa to 3500 MPa. For example, the post-cured composition may have a Young's modulus of from 2900 MPa to 3500 MPa, from 3100 MPa to 3500 MPa, from 3300 MPa to 3500 MPa, from 2700 MPa to 3300 MPa, from 2700 MPa to 3100 MPa, from 2700 MPa to 2900 MPa, or any subset thereof.

The actinically-curable composition may have a ratio of green Young's modulus to post-cured Young's Modulus of from 0.18 to 0.75. For example, the actinically-curable composition may have a ratio of green Young's modulus to post-cured Young's modulus of from 0.18 to 0.70, from 0.18 to 0.60, from 0.18 to 0.50, from 0.18 to 0.40, from 0.18 to 0.30, from 0.30 to 0.75, from 0.40 to 0.75, from 0.50 to 0.75, from 0.60 to 0.75, or any subset thereof.

## Use in 3D Printing Processes

The actinically-curable composition of the present disclosure may be a 3D-printing composition and may be used in a 3D printing process. Accordingly, the actinically-curable composition may be used to construct a 3D printed article which may comprise the actinically-curable composition, the green composition, the post-cured composition, or a combination of these.

The process for the preparation of a 3D printed article may comprise curing the actinically-curable composition. In particular, the actinically-curable composition may be cured by exposing the actinically-curable composition to actinic radiation. Specifically, the actinic radiation may include UV, near-UV, visible, infrared and/or near-infrared radiation, or electron beam radiation.

The 3D printed article may be obtained with a process for the preparation of a 3D printed article that comprises printing a 3D printed article with the actinically-curable composition of the present disclosure. In particular, the process may comprise printing a 3D printed article layer by layer or continuously.

A plurality of layers of an actinically-curable composition in accordance with the present disclosure may be applied to a substrate surface; the plurality of layers may be simultaneously cured (by exposure to a single dose of radiation, for example) or each layer may be successively cured before application of an additional layer of the curable composition. In some embodiments, each layer may be successively cured before the application of an additional layer, then the plurality of layers may be simultaneously cured.

The curable compositions which are described herein can be used as resins in three-dimensional printing applications. Three-dimensional (3D) printing (also referred to as additive manufacturing) is a process in which a 3D digital model is manufactured by the accretion of construction material. The 3D printed object is created by utilizing the computer-aided design (CAD) data of an object through sequential construction of two dimensional (2D) layers or slices that correspond to cross-sections of 3D objects. Stereolithography (SL) is one type of additive manufacturing where a liquid resin is hardened by selective exposure to a radiation to form each 2D layer. The radiation can be in the form of electromagnetic waves or an electron beam. The most commonly applied energy source is ultraviolet, visible or infrared radiation.

Suitable 3D printing processes may include digital light printing (DLP), stereolithography (SLA), inkjet, multi-jet printing, piezoelectric printing, actinically-cured extrusion, liquid crystal display (LCD) printing, and gel deposition printing, and hybrids of any of these.

Stereolithography and other actinically-curable 3D printing methods typically apply low intensity light sources

to radiate each layer of an actinically-curable composition to form the desired article comprising the green composition. As a result, actinically-curable composition polymerization kinetics, the green strength, and homopolymer volumetric shrinkage upon cure of the actinically-curable composition article are important criteria to determine if a particular actinically-curable composition will sufficiently polymerize (cure) when irradiated and have sufficient print fidelity for its intended purpose.

The above mentioned desired article comprising the green composition may then be exposed to an additional dose of actinic radiation in a process known as post-curing. Post-curing the article comprising the green composition may produce an article which comprises the post-cured composition.

The actinically-curable compositions of the present disclosure are especially useful as 3D printing resin formulations, that is, compositions intended for use in manufacturing three-dimensional articles using 3D printing techniques. Such three-dimensional articles may be free-standing/self-supporting and may comprise, consist essentially of, or consist of a composition in accordance with the present disclosure, whether that actinically-curable composition has been cured or not. The three-dimensional article may also be a composite, comprising at least one component consisting essentially of or consisting of a cured composition as previously mentioned as well as at least one additional component comprised of one or more materials other than such a cured composition (for example, a metal component or a thermoplastic component or inorganic filler or fibrous reinforcement). The actinically-curable compositions of the present disclosure may be used in a three-dimensional printing operation together with another material which functions as a scaffold or support for the article formed from the actinically-curable compositions of the present disclosure.

Thus, the actinically-curable compositions of the present disclosure are useful in the practice of various types of three-dimensional fabrication or printing techniques, including methods in which construction of a three-dimensional object is performed in a step-wise or layer-by-layer manner. In such methods, layer formation may be performed by solidification (curing) of the actinically-curable composition under the action of exposure to radiation, such as visible, UV or other actinic irradiation. For example, new layers may be formed at the top surface of the growing object or at the bottom surface of the growing object. The actinically-curable compositions of the present disclosure may also be advantageously employed in methods for the production of three-dimensional objects by additive manufacturing wherein the method is carried out continuously. For example, the object may be produced from a liquid interface. Suitable methods of this type are sometimes referred to in the art as "continuous liquid interface (or interphase) product (or printing)" ("CLIP") methods. Such methods are described, for example, in WO 2014/126830; WO 2014/126834; WO 2014/126837; and Tumbleston et al., "Continuous Liquid Interface Production of 3D Objects," Science Vol. 347, Issue 6228, pp. 1349-1352 (March 20, 2015), the entire disclosure of which is incorporated herein by reference in its entirety for all purposes.

When stereolithography is conducted above an oxygen-permeable build window, the production of an article using an actinically-curable composition in accordance with the present disclosure may be enabled in a CLIP procedure by creating an oxygen-containing "dead zone" which is a thin uncured layer of the curable composition between the window and the surface of the cured article as it is being produced. In such a process, a curable composition is used in which curing (polymerization) is inhibited by the presence of molecular oxygen; such inhibition is typically observed, for example, in curable compositions which are capable of being cured by free radical mechanisms. The dead zone thickness which is desired may be maintained by selecting various control parameters such as photon flux and the optical and curing properties of the curable composition. The CLIP process proceeds by projecting a continuous sequence of actinic radiation (e.g., UV) images (which may be generated by a digital light-processing imaging unit, for example) through an oxygen-permeable, actinic radiation- (e.g., UV-) transparent window below a bath of the curable composition maintained in liquid form. A liquid interface below the advancing (growing) article is maintained by the dead zone created above the window. The curing article is continuously drawn out of the curable composition bath above the dead zone, which may be replenished by feeding into the bath additional quantities of the curable composition to compensate for the amounts of curable composition being cured and incorporated into the growing article.

In another embodiment, the actinically-curable composition may be supplied by ejecting it from a print head rather than supplying it from a vat. This type of process is commonly referred to as inkjet or multi jet 3D printing. One or more UV curing sources mounted just behind the inkjet print head cures the actinically-curable composition immediately after it is applied to the build surface substrate or to previously applied layers. Two or more print heads can be used in the process which allows application of different compositions to different areas of each layer. For example, compositions of different colors or different physical properties can be simultaneously applied to create 3D printed parts of varying composition. In a common usage, support materials - which are later removed during post-processing - are deposited at the same time as the compositions used to create the desired 3D printed part. The printheads can operate at temperatures from about 25 °C up to about 100 °C. Viscosities of the curable compositions are less than 30 mPa.s at the operating temperature of the printhead.

The process for the preparation of a 3D printed article may comprise the steps of:

a) providing (e.g., coating) a first layer of the actinically-curable composition according to the invention onto a surface;

b) curing the first layer, at least partially, to provide a cured first layer;
c) providing (e.g., coating) a second layer of the actinically-curable composition according to the invention onto the cured first layer;
d) curing the second layer, at least partially, to provide a cured second layer adhered to the cured first layer; and
e) repeating steps c) and d) a desired number of times to build up the 3D printed article.

The process for the preparation of a 3D printed article may comprise the steps of:

a) providing (e.g., coating) a first layer of the actinically-curable composition according to the invention in liquid form onto a surface;
b) exposing the first layer image-wise to actinic radiation to form a first exposed imaged cross-section, wherein the actinic radiation is of sufficient intensity and duration to cause at least partial curing of the layer in the exposed areas;
c) providing (e.g., coating) an additional layer of the actinically-curable composition according to the invention onto the previously exposed imaged cross-section;
d) exposing the additional layer image-wise to actinic radiation to form an additional imaged cross-section, wherein the actinic radiation is of sufficient intensity and duration to cause at least partial curing of the additional layer in the exposed areas and to cause adhesion of the additional layer to the previously exposed imaged cross-section;
e) repeating steps c) and d) a desired number of times to build up the 3D printed article.

Either of the two methods above may further comprise step f) exposing the 3D printed article to actinic radiation, wherein the actinic radiation is of sufficient intensity and duration to cause at least 50 wt. %, at least 60 wt. %, at least 70 wt. %, at least 80 wt. %, at least 90 wt. %, at least 95 wt. %, or even at least 99 wt. % of the polymerizable components in the actinically-curable composition to cure, based on the total weight of polymerizable components in the actinically-curable composition. The entirety of, or portions of, the 3D printed article may be exposed to the actinic radiation.

Although the curing steps may be carried out by any suitable means, which will in some cases be dependent upon the components present in the curable composition, in certain embodiments of the disclosure the curing is accomplished by exposing the layer to be cured to an effective amount of radiation, in particular actinic radiation. Actinic radiation may include, for example, electron beam radiation, UV radiation, and visible light radiation. The 3D printed article which is formed may be heated in order to effect thermal curing.

After the 3D printed article has been printed, it may be subjected to one or more post-processing steps. The post-processing steps can be selected from one or more of the following steps removal of any printed support structures, washing with water and/or organic solvents to remove residual resins, and post-curing using thermal treatment and/or actinic radiation either simultaneously or sequentially. The post-processing steps may be used to transform the freshly printed article into a finished, functional article ready to be used in its intended application.

In some embodiments of the one or more post-processing steps, curing may be accelerated or facilitated by supplying energy to the actinically-curable composition, such as by heating the actinically-curable composition. An actinically-curable composition may be cured by exposure to actinic radiation, with further curing being achieved by heating the partially cured article. For example, an article formed from the curable composition (e.g., a 3D printed article) may be heated at a temperature of from 40°C to 120°C for a period of time of from 5 minutes to 12 hours.

A 3D printed article may comprise the actinically-curable composition of the present disclosure. Upon curing, the 3D printed article may comprise the actinically-cured composition of the present disclosure. It should be understood that some portions of the 3D printed article may comprise the actinically-curable composition while other portions of the same article may comprise the actinically-cured composition.

## MEASUREMENT METHODS

### Homopolymer Volumetric Shrinkage

To determine the homopolymer volumetric shrinkage, the liquid density is determined, the solid density is determined, then the difference of the solid density and the liquid density is divided by the liquid density.

The monomer is first mixed with 1 wt. % SpeedCure TPO from Arkema, on a basis of the total weight of the monomer. The monomer/SpeedCure TPO mixture is mixed on a drum roller at 60 °C and subsequently cooled to room temperature to form a liquid resin.

The liquid density is then determined by testing the liquid resin according to ASTM D1475-13(2020) at 25°C.

To determine the solid density, the liquid resin is pipetted into a mold and cured by exposing it to UVA (315-400 nm) and UV-Vis (400-800 nm) radiation for a total of four minutes. The UVA radiation is at an irradiance of 128 $mW/cm^2$ and an energy dosage of 30,500 $mJ/cm^2$. The UV-Vis radiation is at an irradiance of 106 $mW/cm^2$ and an energy dosage of 24,500 $mJ/cm^2$. After curing, the article is allowed to rest from 2 to 4 hours. The resulting solid is then weighed in air

and under solvent to determine its density.

The homopolymer volumetric shrinkage can then be calculated according to the formula:

$$Shrinkage\left(\%\right) = 100\,X\,\frac{Solid\ Density\ -\ Liquid\ Density}{Liquid\ Density}$$

## Actinically-Curable Composition Volumetric Shrinkage

To determine the 3D printing resin volumetric shrinkage, the liquid density is determined, the solid density (after post-curing) is determined, then the difference of the solid density and the liquid density is divided by the liquid density.

First, the polymerizable components of the actinically-curable composition are mixed with a photo-initiator. The mixture is mixed on a drum roller at 60 °C and subsequently cooled to room temperature to form a liquid resin. Then, a cube with 10 mm x 10 mm x 10 mm is 3D printed directly onto the build platform using a layer depth of 50 $\mu$m. Energy dosage and time of exposure are calibrated to achieve 150 $\mu$m cure depth. Duplicates of the cube are printed and measured.

The article is then post-cured. To post-cure the article, it is exposed to UVA and UV-Vis radiation. The UVA radiation is at an irradiance of 128 mW/cm$^2$ and an energy dosage of 15,000 mJ/cm$^2$. The UV-Vis radiation is at an irradiance of 106 mW/cm$^2$ and an energy dosage of 12,700 mJ/cm$^2$. After post-curing, the article is allowed to rest from 2 to 4 hours before re-measuring.

To determine the solid density, the resulting solid cube is weighed in air and under solvent to determine its density.

The volumetric shrinkage can then be calculated according to the formula:

$$Shrinkage\left(\%\right) = 100\,X\,\frac{Solid\ Density\ -\ Liquid\ Density}{Liquid\ Density}$$

The liquid density is determined by testing the liquid resin according to ASTM D1475-13(2020) at 25°C.

## Linear Distortion

Linear distortion may be determined according to the method described in Pang, Thomas Hsing, Michelle D. Guertin and Hop Nguyen. "Accuracy of Stereolithography Parts: Mechanism and Modes of Distortion for a "Letter-H" Diagnostic Part." (1995).

First, the polymerizable components of the actinically-curable composition are mixed with a photo-initiator. The mixture is mixed on a drum roller at 60 °C and subsequently cooled to room temperature to form a liquid resin. Then, an article with an H shape, as shown in Fig. 1(A), is 3D printed using a layer depth 50 $\mu$m. Energy dosage and time of exposure are calibrated to achieve 150 $\mu$m cure depth.

The H-shaped structure is shown in Figs 1(A)-(C). Each of the beams of the H structure is 6.35 mm (D1, shown in Fig. 1(B)) x 6.35 mm x 50 mm (H and W1 shown in Fig. 1(A)).

Outer linear dimensions are measured at points along the sides of the H structure, denoted as points 1, 2, 3, and 4. Points 1 and 4 are within 4 mm of the ends of the vertical beams, as is shown in Fig. 1(A). Points 2 and 3 are within 4 mm of the bottom and top of the cross beam respectively, as is shown n Fig. 1(A). Measurements are taken within 2-4 hours of printing and before post-curing. For completeness, dimension D2 shown in Fig. 1(B) is 11.43 mm(?) and dimension W2 shown in Fig. 1(C) is 55.08 mm.

Differences between the actual measured points 1, 2, 3, and 4 versus the CAD file are reported. Additionally, the difference between each of the measurements is reported in percent difference. For example, 1-2 would be the percent difference between the dimension at point 1 and at point 2.

The article is then post-cured. To post-cure the article, it is exposed to UVA and UV-Vis radiation. The UVA radiation is at an irradiance of 128 mW/cm$^2$ and an energy dosage of 15,000 mJ/cm$^2$. The UV-Vis radiation is at an irradiance of 106 mW/cm$^2$ and an energy dosage of 12,700 mJ/cm$^2$. After post-curing, the article is allowed to rest from 2 to 4 hours before re-measuring.

## Actinically-Curable Composition Mechanical Properties

Tensile properties may be determined according to ASTM D638-14.

First, the polymerizable components of the actinically-curable composition are mixed with a photo-initiator. The mixture is mixed on a drum roller at 60 °C and subsequently cooled to room temperature to form a liquid resin. Then, articles with ASTM D638 Type IV geometry are 3D printed in the XY plane using a layer depth of 50 μm. Energy dosage and time of exposure are calibrated to achieve 150 μm cure depth.

The articles are then removed from the build platform and residual resin is cleaned via sonication in IPA for 2-5 minutes. Flash is removed from the edges with 200-500 grit sandpaper. Both green & post-cured samples are conditioned via ASTM D618 Procedure A for 40-80 hours before testing.

For post-cured tensile properties, articles are exposed to UVA and UV-Vis radiation. The UVA radiation is at an irradiance of 128 $mW/cm^2$ and an energy dosage of 15,000 $mJ/cm^2$. The UV-Vis radiation is at an irradiance of 106 $mW/cm^2$ and an energy dosage of 12,700 $mJ/cm^2$.

## ASPECTS

The present invention may be as defined according to any one of the following aspects.

Aspect 1. An actinically-curable composition comprising: (a) a first component comprising one or more compounds having at least two (meth)acrylate functional groups and at least one hydrogen bond donor group comprising a bond selected from the group consisting of N-H bond, O-H bond and S-H bond; (b) a second component comprising one or more compounds having at least two (meth)acrylate functional groups and no hydrogen bond donor groups; and (c) a third component comprising one or more compounds having formula (I):

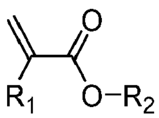 (I)

where: $R_1$ is hydrogen or methyl; $R_2$ is $X\text{-}R_3$ or $R_3$; X is $-(CR^aR^b)_p-$, $-(CH_2\text{-}CH_2\text{-}O)_n-*$, or $-(CH_2\text{-}CH(CH_3)\text{-}O)_m-*$, and the symbol * represents the point of attachment to $R_3$; each $R^a$ and $R^b$ is independently selected from H or alkyl; p, n, and m, are independently from 1 to 10; $R_3$ is a cyclic moiety selected from one of (2,2-dimethyl-1,3-dioxolan-4-yl)methyl (meth)acrylate (IPG(M)A); (2-ethyl-2-methyl-1,3-dioxolan-4-yl)methyl acrylate (MEDOL-10); glycerol formal methacrylate (Glyfoma); tricyclodecane methanol mono(meth)acrylate; adamantan-1-yl acrylate or a compound having a formula (II), (III), (IV), or (V):

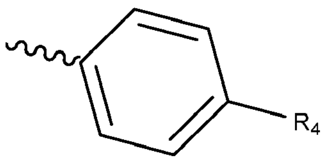 (II)

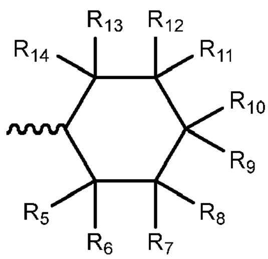 (III)

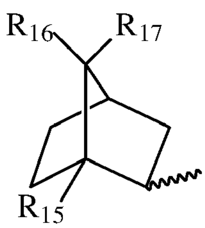 (IV)

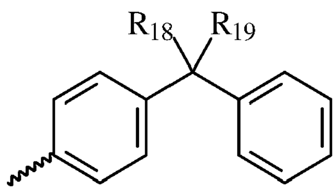 (V)

;

and

$R_4$ to $R_{19}$ are independently selected from the group consisting of hydrogen, $(C_6\text{-}C_{40})$ aryl, and $(C_1\text{-}C_{40})$ alkyl.

Aspect 2. The actinically-curable composition of Aspect 1, wherein the actinically-curable composition comprises from 5 wt. % to 45 wt. % of the third component, based on the total weight of the actinically-curable composition.

Aspect 3. The actinically-curable composition of Aspect 1 or 2, wherein the one or more compounds of the third component have a homopolymer volumetric shrinkage upon curing of less than 8 %.

Aspect 4. The actinically-curable composition of any one of Aspects 1 to 3, wherein the one or more compounds of the third component have formula (I) wherein $R_3$ is a cyclic moiety selected from one of formulas (I), (III), and (IV).

Aspect 5. The actinically-curable composition of any one of Aspects 1 to 3, wherein the third component comprises at least one compound of formula (I) wherein $R_3$ is a cyclic moiety of formula (II).

Aspect 6. The actinically-curable composition of any one of Aspects 1 to 3, wherein the third component comprises at least one compound of formula (I) wherein $R_3$ is a cyclic moiety of formula (III).

Aspect 7. The actinically-curable composition of any one of Aspects 1 to 3, wherein the third component comprises at least one compound of formula (I) wherein $R_3$ is a cyclic moiety of formula (IV).

Aspect 8. The actinically-curable composition of any one of Aspects 1 to 3, wherein the third component comprises at least one compound of formula (I) wherein $R_3$ is a cyclic moiety of formula (V).

Aspect 9. The actinically-curable composition of any one of Aspects 1 to 3, wherein the third component comprises at least one compound chosen from ethoxylated cumylphenol (meth)acrylate, isobornyl (meth)acrylate, phenoxyethyl (meth)acrylate, and p-biphenyl (meth)acrylate.

Aspect 10. The actinically-curable composition of any one of Aspects 1 to 3, wherein the third component comprises isobornyl (meth)acrylate.

Aspect 11. The actinically-curable composition of any one of Aspects 1 to 3, wherein the third component comprises ethoxylated cumylphenol (meth)acrylate.

Aspect 12. The actinically-curable composition of any one of Aspects 1 to 11, wherein the one or more compounds of the first component are di-functional.

Aspect 13. The actinically-curable composition of any one of Aspects 1 to 12, wherein the actinically-curable composition comprises from 10% to 70% by weight of the first component, based on the total weight of the actinically-curable composition.

Aspect 14. The actinically-curable composition of any one of Aspects 1 to 13, wherein the one or more compounds of the first component have a (meth)acrylate equivalent weight from 200 g/eq to 500 g/eq, preferably from 225 g/eq to 280 g/eq.

Aspect 15. The actinically-curable composition of any one of Aspects 1 to 14, wherein the one or more compounds of the first component have at least one hydrogen bond donor group comprising a bond selected from the group consisting of N-H bond and O-H bond.

Aspect 16. The actinically-curable composition of any one of Aspects 1 to 15, wherein the actinically-curable composition comprises from 10 to 70 wt. % of the second component, based on the total weight of the actinically-curable composition.

Aspect 17. The actinically-curable composition of any one of Aspects 1 to 16, wherein the one or more compounds of the second component comprise a heteroatom selected from nitrogen, oxygen, sulfur and fluorine, wherein said heteroatom is not covalently linked to a hydrogen atom.

Aspect 18. The actinically-curable composition of any one of Aspects 1 to 17, wherein the one or more compounds of the second component comprise one or more additional hydrogen bond acceptor groups comprising an oxygen atom included in an ether group (in addition to the hydrogen bond acceptor groups inherent in the (meth)acrylate groups).

Aspect 19. The actinically-curable composition of any one of Aspects 1 to 18, wherein the one or more compounds of the second component have a hydrogen bond acceptor group equivalent weight of from 50 to 200 g/eq, preferably from 50 to 110 g/eq.

Aspect 20. The actinically-curable composition of any one of Aspects 1 to 19, wherein the actinically-curable composition comprises, based on the total weight of the actinically-curable composition: from 10 % to 70 % by weight of the first component, from 10 % to 70 % by weight of the second component, and from 5 % to 45 % by weight of the third component.

Aspect 21. The actinically-curable composition of any one of Aspects 1 to 20, wherein the actinically-curable composition comprises, based on the total weight of the actinically-curable composition: from 10 % to 60 % by weight of the first component, from 12.5 % to 70 % by weight of the second component, and from 5 % to 45 % by weight of the third component.

Aspect 22. The actinically-curable composition of any one of Aspects 1 to 3 and 12 to 21, wherein the actinically-curable composition comprises, based on the total weight of the actinically-curable composition: from 10 % to 55 % by weight of the first component; from 12.5 % to 35% by weight of the second component; and from 10 % to 30 % by weight of the third component; wherein: the one or more compounds of the first component have a (meth)acrylate equivalent weight from 225 g/eq to 280 g/eq, the one or more compounds of the second component have a hydrogen bond acceptor group equivalent weight of from 50 to 110 g/eq, and the third component comprises ethoxylated cumylphenol (meth)acrylate, isobornyl (meth)acrylate, or both.

Aspect 23. The actinically-curable composition of any one of Aspects 1 to 22, wherein the actinically-curable composition comprises from 12.5 to 35 wt. % of the second component, based on the total weight of the actinically-curable composition.

Aspect 24. The actinically-curable composition of any one of Aspects 1 to 23, wherein the actinically-curable composition comprises a fourth component comprising one or more compounds chosen from (meth)acrylate oligomers having a (meth)acrylate equivalent weight from 500 g/eq to 1500 g/eq and a number-average molecular weight of at least 500 g/mol.

Aspect 25. The actinically-curable composition of Aspect 24, wherein the actinically-curable composition comprises from 10% to 45% by weight of the fourth component, based on the total weight of the actinically-curable composition.

Aspect 26. The actinically-curable composition of any one of Aspects 1 to 25, wherein the actinically-curable composition further comprises a photo-initiator.

Aspect 27. A 3D printed article comprising the actinically-curable composition of any one of Aspects 1 to 26.

Aspect 28. The use of the actinically-curable composition of any one of Aspects 1 to 26 in a 3D printing process.

Aspect 29. The use according to Aspect 28, wherein the actinically-curable composition is used in a 3D printing process selected from digital light printing (DLP), stereolithography (SLA), inkjet, multi-jet printing, piezoelectric printing, actinically-cured extrusion, and gel deposition printing.

Aspect 30. An actinically-cured composition comprising the product of actinically curing the actinically-curable composition of any one of Aspects 1 to 26.

Aspect 31. A post-cured composition comprising the product of post-curing the actinically-cured composition of Aspect 30.

Aspect 32. A 3D printed article comprising the actinically-cured composition of Aspect 30 or the post-cured composition of Aspect 31.

Aspect 33. A process for the preparation of a 3D printed article comprising the steps of: a) coating a first layer of the actinically-curable composition of any one of Aspects 1 to 26 onto a surface; b) curing the first layer, at least partially, to provide a cured first layer; c) coating a second layer of the actinically-curable composition of any one of Aspects 1 to 26 onto the cured first layer; d) curing the second layer, at least partially, to provide a cured second layer adhered to the cured first layer; and e) repeating steps c) and d) a desired number of times to build up the 3D printed article.

Aspect 34. The process of Aspect 33, wherein the process further comprises f) exposing the 3D printed article to actinic radiation, wherein the actinic radiation is of sufficient intensity and duration to cause at least 80 wt. % of the polymerizable components in the actinically-curable compositions to cure, based on the total weight of the polymerizable components in the actinically-curable composition.

## EXAMPLES

### Example 1

In Example 1, a series of Comparative and Inventive Examples were prepared using the compounds listed in Tables 5. Inventive monomers or oligomers of the first component are given in Table 5, in which the (meth)acrylate equivalent weight of the first five listed materials listed range between 225 to 280 g/equivalent. Inventive monomers or oligomers of the second component are given in Table 6. Inventive monomers of the third component are given in Table 7. Inventive oligomers of the fourth component are given in Table 8. Components from the Comparative Examples (some of which fall within the first through fourth components) are detailed in Table 9.

Table 5

| Compound | Structure/Description | H-bond donor group |
|---|---|---|
| CN154 | Bisphenol A diglycidyl ether dimethacrylate | O-H |
| CN1964 | Urethane dimethacrylate monomer | N-H |
| NTX 14901 | Proprietary urethane dimethacrylate monomer | N-H |
| PRO4257 | Proprietary urethane diacrylate monomer | N-H |
| CN983 | Urethane diacrylate oligomer | N-H |
| CN989 | Multifunctional aliphatic urethane acrylate | N-H |

Table 6

| Monomer | Structure/Description | H-bond acceptor | H-bond acceptor equivalent weight |
|---|---|---|---|
| SR210 | Polyethylene glycol dimethacrylate | Ether and carbonyl O atoms. | 66.4 |
| SR214 | 1 ,4-butanediol dimethacrylate | Carbonyl O atoms. | 113.1 |

Table 7

| Monomer | Structure/Description |
|---|---|
| SR590 | Ethoxylated cumylphenol acrylate |
| SR423A | Isobornyl methacrylate |

Table 8

| Oligomer | Structure/Description | (Meth)acrylate equivalent weight |
|---|---|---|
| CN1970 | aliphatic urethane dimethacrylate | 638 g/eq |

Table 9

| Compound | Structure/Description |
|---|---|
| **CN996** | A (meth)acrylate oligomer of the fourth component (d) having at least two (meth)acrylate functional groups and having a (meth)acrylate equivalent weight from 500 g/eq to 1500 g/eq and having a number-average molecular weight of at least 500 g/mol |
| **M1** | A monofunctional, non-cyclic acrylate monomer having a volumetric shrinkage of 8.7% |
| **M2** | A monofunctional cyclic monomer not meeting the structural limitations of the third component (c) and having a volumetric shrinkage in an amount of 10.5% |
| **M3** | One or more (meth)acrylate monomers or oligomers having at least two (meth)acrylate functional groups, a hydrogen bond acceptor group equivalent weight of 50-200 g/eq and no hydrogen bond donor groups |

The Inventive and Comparative Examples were prepared with the compositions given in Table 10. Inventive Examples are designated IE-X. Comparative Examples are designated CE-X. Other than CE-2 and CE-3, the amounts given in Table 10 are in by parts per hundred, based on the parts of all constituents other than the photo-initiator (TPO) and the dyes (i.e., labeled with "UVDJ"). For Example, CE-1 is 20 parts CN154(A), 30 parts CN1964(A), 50 parts SR210(B), and 2 parts of TPO (a photo-initiator). CE-2 and CE-3 are known commercially-available dental resins for 3D Printing, including by DLP, marketed for high accuracy.

The compounds labelled UVDJ are dyes. TPO is a Norrish Type I phosphine oxide photo-initiator available from Arkema.

Table 10

| | CE-2 | CE-3 | CE-1 | | IE-4 | IE-5 | IE-6 | IE-7 | IE-8 | IE-9 | IE-10 | IE-11 |
|---|---|---|---|---|---|---|---|---|---|---|---|---|
| The First Component | | | | | | | | | | | | |
| **CN154** | | | 20 | | 20 | 20 | 20 | 20 | 20 | 20 | 20 | |
| **CN1964** | | | 30 | | 30 | 30 | | | | | | 30 |
| **NTX14901** | | | | | | | | | | 30 | 30 | |
| **PRO4257** | | | | | | | 30 | | | | | |

(continued)

| | CE-2 | CE-3 | CE-1 | | IE-4 | IE-5 | IE-6 | IE-7 | IE-8 | IE-9 | IE-10 | IE-11 |
|---|---|---|---|---|---|---|---|---|---|---|---|---|
| The First Component | | | | | | | | | | | | |
| **CN983** | | | | | | | | 30 | | | | |
| **CN989** | | | | | | | | | | | | 20 |
| The Second Component | | | | | | | | | | | | |
| **SR210** | | | 50 | | 25 | 25 | 25 | 25 | | 25 | 25 | 25 |
| **SR214** | | | | | | | | | 21 | | | |
| **M3** | 12.5-35 | 12.5-35 | | | | | | | | | | |
| The Third Component | | | | | | | | | | | | |
| **SR590** | | | | | 25 | | 25 | 25 | 24 | 25 | 25 | 25 |
| **SR423A** | | | | | | 25 | | | | | | |
| The Fourth Component | | | | | | | | | | | | |
| **CN1970** | | | | | | | | | 35 | | | |
| **CN996** | 5-45 | 5-45 | | | | | | | | | | |
| Other Components | | | | | | | | | | | | |
| **M1** | 17 | 17 | | | | | | | | | | |
| **M2** | 38 | 39 | | | | | | | | | | |
| **Photo-initiator** | 1.5 | 1.4 | | | | | | | | | | |
| **TPO** | | | 2 | | 2 | 2 | 2 | 2 | 2 | 2 | 1.5 | 2 |
| **UVDJ-070** | | | | | | | | | | | 0.1 | |
| **UVDJ-170** | | | | | | | | | | | 0.15 | |
| **UVDJ-(BLUE)** | | | | | | | | | | | 0.05 | |

**Example 2**

The viscosity, liquid density, and appearance of each of the Inventive and Comparative Examples was evaluated. The results of this analysis are given in Table 11.

Table 11

| | Viscosity (cP @ 25C) | Liquid density (g/cm$^3$) | Appearance |
|---|---|---|---|
| **CE-2** | 230 | 1.113 | Tan |
| **CE-3** | 175 | 1.106 | Yellowish clear |
| **CE-1** | 200 | 1.116 | Yellowish clear |
| **IE-4** | 170 | 1.08 | Yellowish clear |
| **IE-5** | 935 | 1.131 | Yellowish clear |
| **IE-6** | 1100 | 1.125 | Yellowish clear |
| **IE-7** | 1500 | 1.113 | Yellowish clear |
| **IE-8** | 960 | 1.115 | Yellowish clear |
| **IE-9** | 960 | 1.119 | Blue |
| **IE-10** | 187 | 1.115 | Yellowish clear |

## Example 3

Physical properties of the Inventive and Comparative Examples were obtained in both their green (partially cured) and post-cured states. Tensile strength, elongation at break, and Young's Modulus were obtained according to ASTM D638-14. Solid density and homopolymer volumetric shrinkage were obtained according to the method described in the Measurement Methods section. Results are given in Table 12 below.

Table 12

| | Tensile Strength (green) | Tensile elongation at break (green) | Tensile Young's Modulus (green) | Tensile Strength (post-cured) | Tensile elongation at break (post-cured) | Tensile Young's Modulus (post-cured) | Solid Density | Volumetric Shrinkage |
|---|---|---|---|---|---|---|---|---|
| **Unit** | **Mpa** | **%** | **Mpa** | **Mpa** | **Mpa** | **Mpa** | **g/cm$^3$** | **%** |
| **CE-2** | 33 ± 1 | 44 ± 3 | 1510 ± 50 | 62 ± 2 | 9 ± 2 | 2690 ± 80 | - | - |
| **CE-3** | 31 ± 1 | 50±6 | 1440 ± 170 | 52 ± 1 | 22 ±3 | 2390 ± 280 | 1.21 | 8.8 |
| **CE-1** | 30 ± 2 | 10 ± 4 | 1180 ± 40 | 52 ± 15 | 4 ± 2 | 2960 ± 190 | 1.207 | 9.2 |
| **IE-4** | 29 ± 1 | 21 ± 4 | 1250 ± 60 | 64 ± 7 | 5 ± 1 | 3240 ± 110 | 1.2 | 7.7 |
| **IE-5** | 30 ± 1 | 12 ± 2 | 1430 ± 30 | 63 ± 7 | 5 ± 1 | 3000 ± 40 | 1.167 | 8.0 |
| **IE-6** | 27 ± 4 | 31 ± 3 | 990 ± 200 | 75 ± 2 | 8 ± 1 | 3320 ± 90 | 1.203 | 6.5 |
| **IE-7** | 23 ± 1 | 30 ± 3 | 760 ± 60 | 62 ± 15 | 5 ± 2 | 3310 ± 140 | 1.202 | 6.8 |
| **IE-8** | 23 ± 1 | 25 ± 2 | 590 ± 200 | 58 ± 7 | 4 ± 1 | 3300 ± 100 | 1.183 | 6.4 |
| **IE-9** | 35 ± 1 | 17 ± 3 | 1700 ± 60 | 76 ± 3 | 6 ± 1 | 3350 ± 40 | 1.197 | 7.7 |
| **IE-10** | 34 ± 1 | 16 ± 6 | 1610 ± 70 | 70 ± 4 | 8 ± 1 | 3230 ± 120 | 1.194 | 6.7 |
| **IE-11** | 19 ± 1 | 34 ± 3 | 530 ± 40 | 58 ± 2 | 12 ± 2 | 2740 ± 110 | 1.184 | 7.6 |

## Example 4

H-bar tests were performed on each of the Inventive and Comparative Examples, according to the linear distortion method described in the Measurement Methods section above. Results are given in percent difference.

The volumetric shrinkage, green Young's modulus, post-cured young's modulus, and green to post-cured (PC) Young's modulus ratios were all determined. Overall volumetric shrinkage was determined according to the method described in the Measurement Methods section. Results for both sets of measurements are given in Table 13 below.

Table 13

| | | CE-1 | CE-2 | CE-3 | IE-4 | IE-5 |
|---|---|---|---|---|---|---|
| **Green** | 1-2 | 1.58 | 0.63 | 0.94 | 0.37 | 0.70 |
| | 2-3 | 0.54 | 0.41 | 0.46 | 0.29 | 0.48 |
| | 3-4 | 0.50 | 0.19 | 0.13 | 0.10 | 0.22 |
| **Post-cured** | 1-2 | 2.36 | 1.42 | 1.41 | 0.66 | 1.20 |
| | 2-3 | 0.24 | 0.06 | 0.20 | 0.18 | 0.26 |
| | 3-4 | 0.78 | 0.29 | 0.24 | 0.40 | 0.10 |
| **Volumetric shrinkage (%)** | | 9.2 | - | 8.8 | 7.7 | 8.0 |
| **Green Young's modulus (Mpa)** | | 1180 | 1510 | 1440 | 1250 | 1430 |
| **Post-cured Young's modulus (Mpa)** | | 2690 | 2390 | 2960 | 3240 | 3000 |
| **Green to PC Young's modulus ratio** | | 44% | 63% | 49% | 39% | 48% |

Table 13 - Continued

| | | IE-6 | IE-7 | IE-8 | IE-9 | IE-10 | IE-11 |
|---|---|---|---|---|---|---|---|
| **Green** | 1-2 | 0.70 | 0.60 | 0.93 | 0.48 | 0.81 | 0.85 |
| | 2-3 | 0.34 | 0.34 | 0.41 | 0.21 | 0.33 | 0.63 |
| | 3-4 | 0.13 | 0.11 | 0.31 | 0.11 | 0.07 | 0.08 |
| **Post-cured** | 1-2 | 1.02 | 1.24 | 1.84 | 0.74 | 1.18 | 1.79 |
| | 2-3 | 0.17 | 0.23 | 0.19 | 0.06 | 0.30 | 0.23 |
| | 3-4 | 0.25 | 0.40 | 0.63 | 0.26 | 0.14 | 0.34 |
| **Volumetric shrinkage (%)** | | 6.45 | 6.8 | 6.4 | 7.7 | 6.7 | 7.6 |
| **Green Young's modulus (Mpa)** | | 990 | 760 | 590 | 1700 | 1610 | 530 |
| **Post-cured Young's modulus (Mpa)** | | 3320 | 3310 | 3300 | 3350 | 3230 | 2740 |
| **Green to PC Young's modulus ratio** | | 30% | 23% | 18% | 51% | 50% | 19% |

As is apparent from Table 13, the inventive examples show significantly lower overall volumetric shrinkage than the comparative examples do. Without being limited by theory, it has been found that overall volumetric shrinkage correlates with linear distortion.

## Example 5

Homopolymer volumetric shrinkage tests according to the method described in the Measurement Methods section above were performed on a variety of possible monomers of the third component. Results are given in Table 14

below.

Table 14

| | Liquid Density | Solid Density | Homopolymer Volumetric Shrinkage (%) |
|---|---|---|---|
| **SR590** | 1.099 | 1.157 | 5.2 |
| **SR423A** | 0.984 | 1.047 | 6.4 |
| **SR506A** | 0.99 | 1.065 | 7.6 |
| **NTX14851** | 1.089 | 1.162 | 6.7 |
| **ACMO** | 1.118 | 1.235 | 10.5 |
| **CN9903NS** | 1.069 | 1.162 | 8.7 |
| **HEMA** | 1.068 | 1.274 | 19.4 |
| **HPMA** | 1.025 | 1.204 | 17.5 |
| **SR256** | 1.018 | 1.116 | 9.6 |
| **A-Len-10** | 1.137 | 1.213 | 6.7 |
| **97% pure CTFA** | 1.098 | 1.206 | 9.8 |
| **SR203** | 1.052 | 1.202 | 14.3 |

It will be apparent to persons of ordinary skill in the art that various modifications and variations can be made without departing from the scope disclosed herein. Since modifications, combinations, sub-combinations, and variations of the disclosed embodiments, which incorporate the spirit and substance disclosed herein, may occur to persons of ordinary skill in the art, the scope disclosed herein should be construed to include everything within the scope of the appended claims and their equivalents.

For the purposes of defining the present technology, the transitional phrase "consisting of" may be introduced in the claims as a closed preamble term limiting the scope of the claims to the recited components or steps and any naturally occurring impurities. For the purposes of defining the present technology, the transitional phrase "consisting essentially of" may be introduced in the claims to limit the scope of one or more claims to the recited elements, components, materials, or method steps as well as any non-recited elements, components, materials, or method steps that do not materially affect the novel characteristics of the claimed subject matter.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

**1.** An actinically-curable composition comprising:

(a) a first component comprising one or more compounds having at least two (meth)acrylate functional groups and at least one hydrogen bond donor group comprising a bond selected from the group consisting of N-H bond, O-H bond and S-H bond;

(b) a second component comprising one or more compounds having at least two (meth)acrylate functional groups and no hydrogen bond donor groups; and

(c) a third component comprising one or more compounds having formula (I):

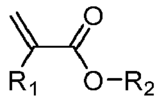 (I)

wherein:

$R_1$ is hydrogen or methyl;
$R_2$ is X-$R_3$ or $R_3$;
X is $-(CR^aR^b)_p-*$, $-(CH_2-CH_2-O)_n-*$, or $-(CH_2-CH(CH_3)-O)_m-*$, and the symbol * represents the point of attachment to $R_3$;
each $R^a$ and $R^b$ is independently selected from H or alkyl;
p, n, and m, are independently from 1 to 10;
$R_3$ is a cyclic moiety selected from one of (2,2-dimethyl-1,3-dioxolan-4-yl)methyl (meth)acrylate (IPG(M)A); (2-ethyl-2-methyl-1,3-dioxolan-4-yl)methyl acrylate (MEDOL-10); glycerol formal methacrylate (Glyfoma); tricyclodecane methanol mono(meth)acrylate; adamantan-1-yl acrylate or a compound having a formula (II), (III), (IV), or (V):

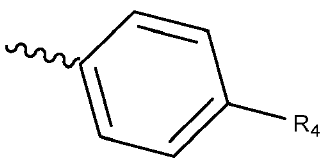 (II) 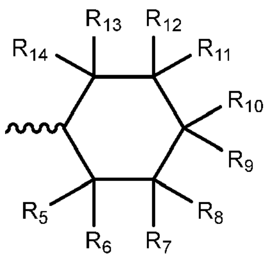 (III)

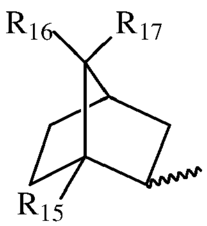 (IV) 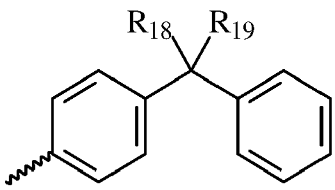 (V)

;

and
$R_4$ to $R_{19}$ are independently selected from the group consisting of hydrogen, $(C_6-C_{40})$ aryl, and $(C_1-C_{40})$ alkyl.

**2.** The actinically-curable composition of claim 1, wherein the actinically-curable composition comprises from 5 wt. % to 45 wt. % of the third component, based on the total weight of the actinically-curable composition.

**3.** The actinically-curable composition of claims 1 or 2, further comprising a photo-initiator.

**4.** The actinically-curable composition of any of claims 1 to 3, wherein the third component comprises one or more compounds chosen from ethoxylated cumylphenol (meth)acrylate, isobornyl (meth)acrylate, phenoxyethyl (meth)acrylate, and p-biphenyl (meth)acrylate.

**5.** The actinically-curable composition of any one of claims 1 to 4, the one or more compounds of the third component has a homopolymer volumetric shrinkage upon curing of less than 8 %.

**6.** The actinically-curable composition of any one of claims 1 to 5, wherein the one or more compounds of the first component has a (meth)acrylate equivalent weight from 200 g/eq to 500 g/eq, preferably from 225 g/eq to 280 g/eq.

**7.** The actinically-curable composition of any one of claims 1 to 6, wherein the second component has a hydrogen bond acceptor group equivalent weight of 50 g/eq to 200 g/eq.

**8.** The actinically-curable composition of any one of claims 1 to 7 comprising, based on the total weight of the actinically-curable composition:

from 10 % to 70% by weight of the first component,
from 10 % to 70 % by weight of the second component, and
from 5 % to 35 % by weight of the third component.

**9.** The actinically-curable composition of any one of claims 1 to 8, comprising, based on the total weight of the actinically-curable composition:

from 10 % to 55 % by weight of the first component;
from 12.5% to 35% by weight of the second component; and
from 10% to 30 % by weight of the third component;
wherein:

the one or more compounds of the first component have a (meth)acrylate equivalent weight from 225 g/eq to 280 g/eq,
the one or more compounds of the second component have a hydrogen bond acceptor group equivalent weight of from 50 g/eq to 110 g/eq, and
the third component comprises ethoxylated cumylphenol (meth)acrylate, isobornyl (meth)acrylate, or both.

**10.** The actinically-curable composition of any one of claims 1 to 9, further comprising a fourth component comprising one or more compounds chosen from (meth)acrylate oligomers having at least two (meth)acrylate functional groups and having a (meth)acrylate equivalent weight from 500g/eq to 1500 g/eq and a number-average molecular weight of at least 500 g/mol, wherein the fourth component is present in an amount of at least 10 % by weight, preferably at most 45% by weight, based on the total weight of the actinically-curable composition.

**11.** An actinically-cured composition comprising the product of actinically curing the actinically-curable composition of according to any one of claims 1 to 10.

**12.** The use of the actinically-curable composition according to any one of claims 1 to 10 in a 3D printing process.

**13.** A 3D printed article comprising an actinically-cured composition according to claim 11.

**14.** A process for the preparation of a 3D printed article comprises the steps of:

a) coating a first layer of the actinically-curable composition of any of claims 1 to 10 onto a surface;
b) curing the first layer, at least partially, to provide a cured first layer;
c) coating a second layer of the actinically-curable composition of any of claims 1 to 10 onto the cured first layer;
d) curing the second layer, at least partially, to provide a cured second layer adhered to the cured first layer; and
e) repeating steps c) and d) a desired number of times to build up the 3D printed article.

**15.** The process for the preparation of a 3D printed article of claim 14 further comprising
f) exposing the 3D printed article to actinic radiation, wherein the actinic radiation is of sufficient intensity and duration to cause at least 80 wt. % of the polymerizable components in the actinically-curable compositions to cure, based on the total weight of the polymerizable components in the actinically-curable composition.

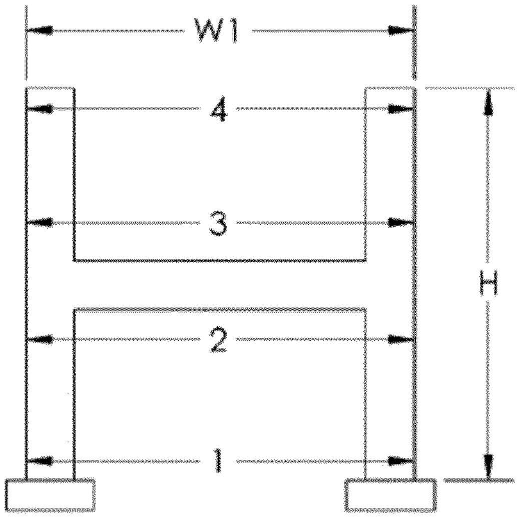


FIG. 1(A)

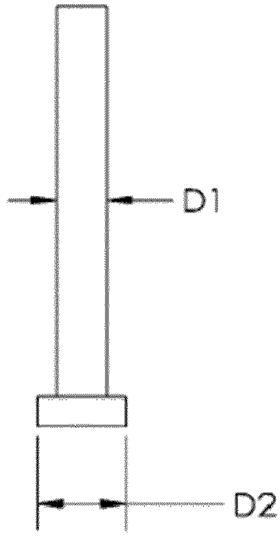


FIG. 1(B)

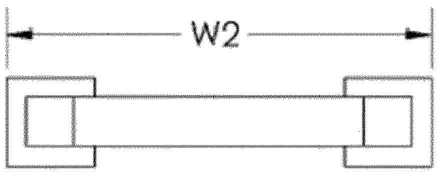


FIG. 1(C)

Europäisches Patentamt
European Patent Office
Office européen des brevets

# EUROPEAN SEARCH REPORT

Application Number
EP 23 30 5762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/219729 A1 (ARKEMA FRANCE [FR]) 6 December 2018 (2018-12-06) * claims 1,22,24 * * examples 2,10,12-14; table 3 * ----- | 1-5,7,8, 11-15 | INV. B33Y70/00 C08F2/48 C08F222/10 |
| X | US 2019/358892 A1 (KITO KATSUYUKI [JP] ET AL) 28 November 2019 (2019-11-28) * paragraph [0008] * * table 1 * ----- | 1-15 | |
| X | US 11 352 514 B1 (OMEIS JÜRGEN [DE] ET AL) 7 June 2022 (2022-06-07) * claim 1 * * examples A-4 * ----- | 1-5,7, 11-15 | |
| | | | TECHNICAL FIELDS SEARCHED (IPC) |
| | | | B33Y |

The present search report has been drawn up for all claims

1

| Place of search | Date of completion of the search | Examiner |
|---|---|---|
| The Hague | 12 October 2023 | Fernandez Recio, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 30 5762

This annex lists the patent family members relating to the patent documents cited in the above-mentioned European search report. The members are as contained in the European Patent Office EDP file on
The European Patent Office is in no way liable for these particulars which are merely given for the purpose of information.

12-10-2023

| Patent document cited in search report | Publication date | Patent family member(s) | Publication date |
|---|---|---|---|
| WO 2018219729 A1 | 06-12-2018 | CA 3064314 A1 | 06-12-2018 |
| | | CN 110709436 A | 17-01-2020 |
| | | EP 3630857 A1 | 08-04-2020 |
| | | JP 2020521837 A | 27-07-2020 |
| | | KR 20200015581 A | 12-02-2020 |
| | | TW 201903065 A | 16-01-2019 |
| | | US 2020277423 A1 | 03-09-2020 |
| | | WO 2018219729 A1 | 06-12-2018 |
| US 2019358892 A1 | 28-11-2019 | JP WO2018142485 A1 | 14-11-2019 |
| | | US 2019358892 A1 | 28-11-2019 |
| | | WO 2018142485 A1 | 09-08-2018 |
| US 11352514 B1 | 07-06-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014126830 A
- WO 2014126834 A
- WO 2014126837 A


### Non-patent literature cited in the description


- **LIN, CHIH-HSIN et al.** Mechanical Properties, Accuracy, and Cytotoxicity of UV-polymerized 3D Printing Resins Composed of Bis-EMA, UDMA, and TEGDMA. *The Journal of Prosthetic Dentistry,* 2019, vol. 123 (2), 349-354
- **TUMBLESTON et al.** Continuous Liquid Interface Production of 3D Objects. *Science,* 20 March 2015, vol. 347 (6228), 1349-1352
- **PANG, THOMAS HSING ; MICHELLE D. GUERTIN ; HOP NGUYEN.** *Accuracy of Stereolithography Parts: Mechanism and Modes of Distortion for a "Letter-H" Diagnostic Part,* 1995